# EUROPEAN PATENT SPECIFICATION

(11) **EP 0 761 378 B1**
(45) Date of publication and mention of the grant of the patent: **29.07.1998**
(21) Application number: 96302990.5
(22) Date of filing: 29.04.1996
(51) Int. Cl.: B23K 35/00, B23K 11/02, E01B 11/00, E01B 11/50

(54) **Method and apparatus for bonding crossing rails**
Verfahren und Vorrichtung zum Verbinden von Kreuzungsschienen
Procédé et dispositif pour relier des rails de croisements

(30) Priority: 06.09.1995 JP 255573/95
(43) Date of publication of application: 12.03.1997
(73) Proprietor: DAIDO TOKUSHUKO KABUSHIKI KAISHA, Naka-ku Nagoya-shi Aichi-ken (JP)
(72) Inventor: Shimizu, Takao, Nagoya-shi, Aichi-ken (JP); Mune, Mitsuhiko, Kounan-shi, Aichi-ken (JP); Komori, Atsushi, Handa-shi, Aichi-ken (JP)
(74) Representative: Whalley, Kevin

(56) References cited:
- EP-A- 0 602 729
- FR-A- 2 471 831
- GB-A- 2 126 511
- PATENT ABSTRACTS OF JAPAN vol. 016, no. 232 (M-1256), 28 May 1992 & JP 04 046686 A (KOMATSU LTD;OTHERS: 01), 17 February 1992,

## Description

The present invention relates to a method and apparatus for bonding a crossing rail to be used at a switching or branching point of a railway.

In general, in many cases, a high manganese cast steel (SCMnH3: JIS-G5131) is used to crossing rails used in switching points of the rail road in view of anti-wear and shock-proof properties. Recently, in order to cope with the high speed operation of trains, there are increased demands that the high manganese cast steel cross rails and the regular rails made of carbon steel are usually bonded together to attain a one-piece structure. However, according to a conventional bonding method such as a gas pressure bonding, a Thermit welding or an enclosed welding, it would be difficult to integrate the crossing rail and the regular rails together. Accordingly, conventionally, there is only a method for mechanically fastening both the rails. The method suffers from problems that gaps or steps are formed between the rails and it would be difficult to sufficiently cope with the high speed operation of the passing trains and the improvement of the riding comfort (to reduce the vibration and noises).

In contrast, there have been attempts to integrate the crossing rails and the regular rails by the arc welding method using a welding rod made of Fe-Mn-Cr-Ni. However, an initial hardness of the welding material for the welding rod is low in comparison with that of the regular rail. In addition, a machinability thereof would be inferior in comparison with that of the high manganese cast steel. As a result, the welding material would be worn in use. It is therefore difficult to control the welding work. In this case, a crack would be likely to occur in the welded part. Thus, the conventional system suffers from various problems. It would be difficult to attain the satisfactory result.

Attention is also drawn to GB-A-2 216 511 which discloses an apparatus for upset butt welding comprising heating means for heating a bonding portion and means for applying pressure to bonding interfaces.

Accordingly, in view of the foregoing defects, an object of the invention is to provide a method and apparatus for bonding a crossing rail to obtain a high bonding strength while enabling the bonding work in a short period of time without any welding crack and any degradation in material quality.

In order to attain this and other objects, according to the present invention, there is provided a method for bonding a crossing rail, comprising the steps of: inserting an insert member having a melting point Ti that is lower than the melting point Tb of a metal material of a crossing rail made of a high manganese cast steel and having a melting point TB1, or a regular rail having a melting point TB2, in between the crossing rail and the regular rail; and while applying a pressure to a bonding interface of the crossing rail and the regular rail through the insert member, heating the bonding portion to a temperature T to meet a relationship, Ti<T<Tb and holding the temperature T for a constant period of time to thereby bond both the rails without melting any of the rails. That is, when TB1 is less than TB2, then Ti will be less than TB1; and when TB1 is greater than TB2, Ti will be less than TB2.

Also, an apparatus for bonding a crossing rail used in the method for bonding the crossing rail according to the present invention is characterized by comprising a heating means for heating a bonding portion, a means for measuring a temperature of the bonding portion, a means for applying a pressure to bonding interfaces, a means for measuring the pressure, a means for causing inert gas to flow in the vicinity of the bodning portion and a means for controlling these means.

According to the bonding method of the present invention, the insert member is inserted in between the bonding interfaces of the crossing rail made of high manganese cast steel crossing rails and regular rails. The insert material has the melting temperature Ti that is further lower than the melting temperature Tb of the metal material of the high manganese cast steel that is the basic material of the crossing rail and the metal material that is the basic material of the regualr rail. According to the present invention, while applying the bonding interfaces of both the rails through the insert material, the bonding portion thereof is heated up to the temperature T which meets the relationship, Ti<T<Tb and the temperature is maintained for a predetermined period of time to thereby bond both the rails without melting the rails.

According to the present invention, it is possible to apply various heating method as the heating method of the bonding portion itself. It is preferable that the bonding portion is heated by using a high frequency wave induction heating method at a frequency of 400kHz or less or by using a direct electric heating method at a frequency of 400kHz or less. It is therefore possible to more firmly bond the two rails. In the same meaning, it is preferable that sheets or powder made of nickel alloy having a melting temperature of 1,200°C or less is used as the insert member. Also, it is preferable that the bonding conditions are that the bonding temperature T meets the relationship, T≤1,300°C, the applied pressure P to the bonding interface meets the relationship, P≤1MPa, the maintenace time S at the bonding temperature T meets the relationship, S≥60 secs, and the surface roughness Rmax of the bonding interface meets the relationship, Rmax≤100µm. Also, it is preferable in the method that the bonding portion is bonded with inert gas shield.

It is also preferable according to the present invention that the bonding portion is rapidly cooled after the bonding. This is because both the rails may be more firmly bonded together. For the same purpose, it is effective that the bonding portion is heated to a temperature of 300°C or more to 450°C or less after the bonding, and the bonding portion is maintained for 0.5 hours or longer at the same temperature, and then cooled.

It is further preferable that the bonding portion is subjected to a shot-peening after the bonding. This is because both the rails may be more firmly bonded together. For the same purpose, it is also effective to apply the shot peening to the bonding portion which have been rapidly cooled after the bonding, the bonding portion which has been thermally treated after bonding, or the bonding portion which has been subjected to the heat treatment after the rapid cooling after the bonding.

According to the present invention, the bonding portion is bonded by heating the bonding portion to the temperature T which meets the condition, Ti<T<Tb, melting the insert member and maintaining the bonding portion at the temperature. It is possible to carry out the bonding in a very narrow range without melting the metal material which is the basic material of the regular rail and the high manganese cast steel which is the basic material of the crossing rail. Accordingly, since there is no region where the hardness is low like the weld material in case where the arc welding method is used for bonding, it is possible to prevent a local wear in the weld portion. Also, since the bonding is carried out under a pressure, there is no weld crack as in the case the arc welding method is used for bonding. Furthermore, since it is possible to carry out the bonding in a short period of time in comparison with the arc weld method, it is possible to suppress the degradation of the basic material. According to the present invention, it is possible to bond the rails firmly with a high efficiency.

In the accompanying drawings:
Fig. 1 is a schematic view showing a bonding device according to the present invention; and
Fig. 2 is a schematic view showing another bonding device according to the present invention.

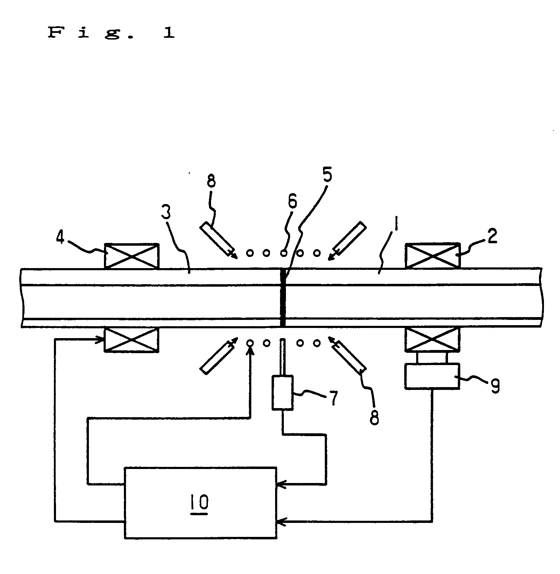

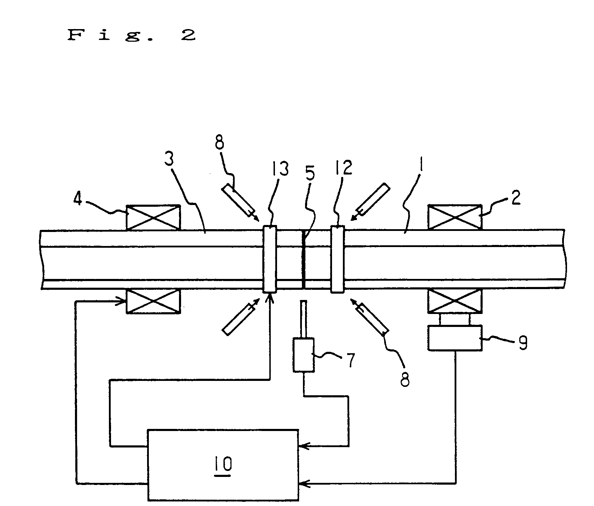

Fig. 1 is a schematic view showing a joint device according to the present invention. In Fig. 1, reference numeral 1 denotes crossing rails made of high manganese cast steel, numeral 2 denotes stationary chucks for gripping the crossing rails 1, numeral 3 denotes regular rail to be joined to the crossing rails 1, numeral 4 denotes movable chucks for gripping the regular rails 3, numeral 5 denotes insert member inserted between both the rails, numeral 6 denotes a high frequency wave inductive coil for heating the bonding portion of both the rails, numeral 7 denotes a radiational thermometer for detecting the temperature of the bonding portion, numeral 8 denotes a gas spray nozzle for gas-seal of the bonding portion, numeral 9 denotes a pressure gauge (load cell) provided on the stationary chucks 2 for detecting the pressure of the bonding portion applied from the regular rails 3 to the crossing rails 1, and numeral 10 denotes a controller for controlling the heat by the high frequency wave inductive coil 6 and the applied pressure by the movable chucks 4, respectively. The controller 10 is so constructed that the temperature of the bonding portion detected by the radial thermometer 7 and the pressure of the bonding portion detected by the pressure gauge 9 are fed back to be controlled to preselected values.

Fig. 2 is a schematic view showing another bonding device according to the present invention. The reference numerals which will not been explained are the same as those in Fig. 1. It should be however noted that numeral 12 denotes an AC electrode mounted on the crossing rail 1, numeral 13 denotes an AC electrode mounted on the regular rail 3, and numeral 10 denotes a controller for controlling the direct electrically generated heat through the AC electrodes 12 and 13 and the pressure applied by the movable chucks 4, respectively.

The insert member 5 is in the form of a sheet or powder made of Ni-Si-B (having a melting point of 1,050°C) or Ni-Cr-Si-B (having a melting point of 1,100°C) or the like that has a lower melting point than a melting point (1,375°C) of a high manganese cast steel which is the basic material of the crossing rail 1 and a melting point (1,470°C) of a carbon steel which is the basic material of the regular rail 3. Usually, the thickness of the insert member 5 is about 40µm. Such an insert member 5 is inserted in between joint faces of both rails and the movable chucks 4 are advanced to keep the applied pressure at 5MPa at the bonding portion. The bonding portion is heated up 1,200°C with the inductive heat of frequency of 50kHz through the inductive coil 6 or the direct electric heat of frequency of 50kHz through the AC electrodes 12 and 13 to keep its heating condition for about 90 seconds. Thus, the insert member 5 is molten and diffused into each metal structure from the bonding faces of the crossing rail 1 and the regular rail 3, thereby firmly fasten the bonding faces.

### Example 1

Table 1 shows a tension test result, a fatigue test result or the like in the case where, in accordance with the embodiment of the present invention explained in conjunction with Figs. 1 and 2, a crossing rail made of high manganese cast steel (SCMnH3, melting point 1,375°C) and a regular rail made of carbon steel (melting point 1,470°C) were coupled with each other. Example 1 is a case of conventional arc welding with covered electrode, and Example 2 is a case where the insert member was not used. Also, in any example, rapid cooling was not effected after the bonding, and any thermal treatment was not effected. In Table 1, Example 1 shows a bonding by the conventional shielded metal-arc welding method, Example 2 shows a bonding made without an insert material. In each example, neither rapid cooling after bonding nor heat treatment was carried out. From Fig. 1, it is apparent that, according to the present invention, by using the insert member under the specified counditions, both the rails were firmly bonded.

**Table 1**

| items | | Ex. 1 | Ex. 2 | Ex. 3 | Ex. 4 | Ex. 5 | Ex. 6 |
|---|---|---|---|---|---|---|---|
| | | Comparison | Comparison | Invention | Invention | Invention | Invention |
| insert Material | kind | - | no | Ni-Si-B (sheet) | Ni-Si-B (sheet) | Ni-Cr-Si-B (sheet) | Ni-Si-B (powder) |
| | melt. temp. (°C) | - | - | 1,050 | 1,050 | 1,100 | 1,050 |
| heating method | kind | - | induction | induction | direct current | direct-current | induction |
| | Fre. (Hz) | - | 50k | 50k | 50k | 50k | 50k |
| joint surface roughness Rmx(µm) | | - | 40 | 40 | 40 | 40 | 40 |
| shielding gas | | - | N₂ | N₂ | N₂ | N₂ | N₂ |
| bonding temp.(°C) | | - | 1,200 | 1,200 | 1,200 | 1,200 | 1,200 |
| holding period (sec) | | - | 90 | 90 | 90 | 90 | 90 |
| applied pressure (MPa) | | - | 5 | 5 | 5 | 5 | 5 |
| rapid cooling of bonding portion | | - | no | no | no | no | no |
| bonding efficiency | | bad | good | good | good | good | good |
| tension test | tensile strength (MPa) | 748 | 304 | 753 | 746 | 750 | 747 |
| | elongation (%) | 28 | 0 | 30 | 30 | 30 | 30 |
| | fractured position | SCMnH3 basic material | bonding interface | SCMnH3 basic material | SCMnH3 basic material | SCMnH3 basic material | SCMnH3 basic material |
| fatigue test | stress amplitude Nf at 206M Pa | <1x10⁴ | <1x10⁴ | >2x10⁶ | >2x10⁶ | >2x10⁶ | >2x10⁶ |
| | fractured position | bonding interface | bonding interface | SCMnH3 basic material | SCMnH3 basic material | SCMnH3 basic material | SCMnH3 basic material |
| total evaluation | | bad | bad | good | good | good | good |

Table 2 shows a result in the case where the same bonding is effected. However, in this case, the frequency was changed in the high frequency inductive heating or direct electric heaitng. From Table 2, it will be understood that it is desirable that the frequency is less than 400kHz.

**Table 2**

| items | | Ex. 7 | Ex. 8 | Ex. 9 | Ex. 10 | Ex. 11 |
|---|---|---|---|---|---|---|
| | | Invention | Invention | Invention | Invention | Invention |
| insert | kind | Ni-Si-B (sheet) | Ni-Si-B (sheet) | Ni-Si-B (sheet) | Ni-Si-B (sheet) | Ni-Cr-Si-B (sheet) |
| | melt. temp. (°C) | 1,050 | 1,050 | 1,050 | 1,050 | 1,100 |
| heating method | kind | induction | induction | induction | direct current | direct current |
| | Fre. (Hz) | 1M | 400k | 100k | 1M | 400k |
| joint surface roughness Rmx(µm) | | 40 | 40 | 40 | 40 | 40 |
| shielding gas | | N₂ | N₂ | N₂ | N₂ | N₂ |
| bonding temp. (°C) | | 1,200 | 1,200 | 1,200 | 1,200 | 1,200 |
| holding period (sec) | | 90 | 90 | 90 | 90 | 90 |
| applied pressure (MPa) | | 5 | 5 | 5 | 5 | 5 |
| rapid cooling of bonding portion | | no | no | no | no | no |
| bonding efficiency | | bad | good | good | bad | good |
| tension test | tensile strength (MPa) | 437 | 738 | 753 | 420 | 741 |
| | elongation (%) | 16 | 30 | 30 | 13 | 31 |
| | fractured position | bonding interface | SCMnH3 basic material | SCMnH3 basic material | bonding interface | SCMnH3 basic material |
| fatigue test | stress amplitude Nf at 206MPa | 2x10⁵ | >2x10⁶ | >2x10⁶ | 2x10⁵ | >2x10⁶ |
| | fractured position | bonding interface | SCMnH3 basic material | SCMnH3 basic material | bonding interface | SCMnH3 basic material |
| total evaluation | | medium | good | good | medium | good |

Table 3 shows a result in the case where the same bonding is effected. However, in this case, the kind and melting point of the insert member and its bonding temperature were changed. From Table 3, it will be understood that it is necessary that the temperature T should satisfy the above-described condition, Ti<T<Tb.

**Table 3**

| items | | Ex. 12 | Ex. 13 | Ex. 14 | Ex. 15 | Ex. 16 |
|---|---|---|---|---|---|---|
| | | Comparison | Invention | Invention | Comparison | Invention |
| insert | kind | Ni-Si-B (sheet) | Ni-Si-B (sheet) | Ni-Si-B (sheet) | Ni-Si-B (sheet) | Ni-Cr-Si-B (sheet) |
| | melt. temp. (°C) | 1,250 | 1,200 | 1,100 | 1,050 | 1,100 |
| heating method | kind | induction | induction | induction | direct current | direct current |
| | Fre. (Hz) | 20k | 20k | 20k | 20k | 20k |
| joint surface roughness Rmx(µm) | | 40 | 40 | 40 | 40 | 40 |
| shielding gas | | N₂ | N₂ | N₂ | N₂ | N₂ |
| bonding temp. (°C) | | 1,250 | 1,250 | 1,200 | 1,380 | 1,250 |
| holding period (sec) | | 90 | 90 | 90 | 90 | 90 |
| applied pressure (MPa) | | 5 | 5 | 5 | 5 | 5 |
| rapid cooling of bonding portion | | no | no | no | no | no |
| bonding efficiency | | good | good | good | good | good |
| tension test | tensile strength (MPa) | 451 | 743 | 758 | 384 | 737 |
| | elongation (%) | 4 | 30 | 30 | 2 | 30 |
| | fractured position | bonding interface | SCMnH3 basic material | SCMnH3 basic material | bonding interface | SCMnH3 baisc material |
| fatigued test | stress amplitude Nf at 206MPa | <3x10⁴ | >2x10⁶ | >2x10⁶ | <1x10⁴ | >2x10⁶ |
| | fractured position | bonding interface | SCMnH3 basic material | SCMnH3 basic material | bonding interface | SCMnH3 baisc material |
| total evaluation | | bad | good | good | bad | good |

Table 4 shows a result in the case where the same bonding is effected. In this case, the bonding time was changed. In Table 4, the example 17 is an example where no maintenace time was kept.

**Table 4**

| items | | Ex. 17 | Ex. 18 | Ex. 19 |
|---|---|---|---|---|
| | | Comparison | Invention | Invention |
| insert | kind | Ni-Si-B (sheet) | Ni-Si-B (sheet) | Ni-Si-B (sheet) |
| | melt. temp. (°C) | 1,100 | 1,100 | 1,100 |
| heating method | kind | induction | induction | induction |
| | Fre. (Hz) | 3k | 3k | 3k |
| joint surface roughness Rmx(µm) | | 30 | 30 | 30 |
| shielding gas | | N₂ | N₂ | N₂ |
| bonding temp. (°C) | | 1,200 | 1,200 | 1,200 |
| holding period (sec) | | 0 | 60 | 180 |
| applied pressure (MPa) | | 5 | 5 | 5 |
| rapid cooling of bonded portion | | no | no | no |
| bonding efficiency | | good | good | good |
| tension test | tensile strength (MPa) | 504 | 746 | 741 |
| | elongation (%) | 3 | 30 | 30 |
| | fractured position | bonding interface | SCMnH3 basic material | SCMnH3 basic material |
| fatigue test | stress amplitude Nf at 206MPa | 1x10⁵ | >2x10⁶ | >2x10⁶ |
| | fractured position | bonding interface | SCMnH3 basic material | SCMnH3 basic material |
| total evaluation | | bad | good | good |

Table 5 shows a result in the case where the same bonding is effected. In this case, the applied pressure in bonding was changed for bonding the rails. From Table 5, it will be understood that it is preferable that the applied pressure in bonding be not smaller than 1MPa.

**Table 5**

| items | | Ex. 20 | Ex. 21 | Ex. 22 |
|---|---|---|---|---|
| | | Invention | Invention | Invention |
| insert | kind | Ni-Si-B (sheet) | Ni-Si-B (sheet) | Ni-Si-B (sheet) |
| | melt. temp. (°C) | 1,100 | 1,100 | 1,100 |
| heating kind | | induction | induction | induction |
| method Fre. (Hz) | | 3k | 3k | 3k |
| joint surface roughness Rmx(µm) | | 30 | 30 | 30 |
| shielding gas | | N₂ | N₂ | _{N₂} |
| bonding temp. (°C) | | 1,200 | 1,200 | 1,200 |
| holding period (sec) | | 180 | 180 | 120 |
| applied pressure (MPa) | | 0.5 | 1 | 10 |
| rapid cooling of bonded portion | | no | no | no |
| bonding efficiency | | good | good | good |
| tension test | tensile strength (MPa) | 660 | 738 | 745 |
| | elongation (%) | 9 | 30 | 30 |
| | fractured position | bonding interface | SCMnH3 basic material | SCMnH3 basic material |
| fatigue test | stress amplitude Nf at 206MPa | 1x10⁶ | >2x10⁶ | >2x10⁶ |
| | fractured position | bonding interface | SCMnH3 basic material | SCMnH3 basic material |
| total evaluation | | medium | good | good |

Table 6 shows a result in the case where the same bonding is effected. In this case, the surface roughness Rmax of the bonding face in the crossing rail and the regular rail were changed. From Table 6, it will be understood that the surface roughness Rmax of the bonding surface be not greater than 100µm.

**Table 6**

| items | | Ex. 23 | Ex. 24 | Ex. 25 |
|---|---|---|---|---|
| | | Invention | Invention | Invention |
| insert | kind | Ni-Si-B (sheet) | Ni-Si-B (sheet) | Ni-Si-B (sheet) |
| | melt. temp. (°C) | 1,100 | 1,100 | 1,100 |
| heating method | kind | induction | induction | induction |
| | Fre. (Hz) | 3k | 3k | 3k |
| joint surface roughness Rmx(µm) | | 150 | 100 | 10 |
| shielding gas | | N₂ | N₂ | N₂ |
| bonding temp. (°C) | | 1,200 | 1,200 | 1,200 |
| holding period (sec) | | 90 | 90 | 90 |
| applied pressure (MPa) | | 7 | 7 | 7 |
| rapid cooling of bonded portion | | no | no | no |
| bonding efficiency | | good | good | good |
| tension test | tensile strength (MPa) | 581 | 741 | 752 |
| | elongation (%) | 14 | 30 | 30 |
| | fractured position | bonding interface | SCMnH3 basic material | SCMnH3 basic material |
| fatigue test | stress amplitude Nf at 206MPa | 8x10⁴ | >2x10⁶ | >2x10⁶ |
| | fractured position | bonding interface | SCMnH3 basic material | SCMnH3 basic material |
| total evaluation | | medium | good | good |

Table 7 shows a result in the case where the same bonding is effected. In this case, the shielding gas in bonding was changed. From Table 7, it will be understood that it is desirable that the bonding portion is shielded by inert gas shielding in bonding.

**Table 7**

| items | | Ex. 26 | Ex. 27 | Ex. 28 | Ex. 29 |
|---|---|---|---|---|---|
| | | Invention | Invention | Invention | Invention |
| insert | kind | Ni-Si-B (sheet) | Ni-Si-B (sheet) | Ni-Si-B (sheet) | Ni-Si-B (sheet) |
| | melt. temp. (°C) | 1,100 | 1,100 | 1,100 | 1,100 |
| heating method | kind | direct current | direct current | direct current | direct current |
| | Fre. (Hz) | 10k | 10k | 10k | 10k |
| joint surface roughness Rmx(µm) | | 30 | 30 | 30 | 30 |
| shielding gas | | no | Ar | He | N₂ |
| bonding temp. (°C) | | 1,200 | 1,200 | 1,200 | 1,200 |
| holding period (sec) | | 120 | 120 | 120 | 120 |
| applied pressure (MPa) | | 5 | 5 | 5 | 5 |
| rapid cooling of bonded portion | | no | no | no | no |
| bonding efficiency | | good | good | good | good |
| tension test | tensile strength (MPa) | 419 | 750 | 748 | 746 |
| | elongation (%) | 12 | 30 | 30 | 30 |
| | fractured position | bonding interface | SCMnH3 basic material | SCMnH3 basic material | SCMnH3 basic material |
| fatigue test | stress amplitude Nf at 206MPa | 2x10⁵ | >2x10⁶ | >2x10⁶ | >2x10⁶ |
| | fractured position | bonding interface | SCMnH3 basic material | SCMnH3 basic material | SCMnH3 basic material |
| total evaluation | | medium | good | good | good |

Table 8 shows a result in the case where the same bonding is effected. In these Examples, the bonding portion was water-cooled rapidly after the bonding. And then, in Examples 31∼34, the bonding portion was subjected to heat treatment after this water-cooling. In this heat treatment, the cooling was carried out by air-cooling. From Table 8, it is preferable that the heat treatment is effected after the rapid cooling and it will be understood that it is preferable that the heat treatment be effected for reheating at 300 to 450°C and the temperature be kept for 0.5 hours or longer.

**Table 8**

| items | | Ex. 30 | Ex. 31 | Ex. 32 | Ex. 33 | Ex. 34 |
|---|---|---|---|---|---|---|
| | | Invention | Invention | Invention | Invention | Invention |
| insert | kind | Ni-Si-B (sheet) | Ni-Si-B (sheet) | Ni-Si-B (sheet) | Ni-Si-B (sheet) | Ni-Si-B (sheet) |
| | melt. temp. (°C) | 1,050 | 1,050 | 1,050 | 1,050 | 1,050 |
| heating method | kind | induction | induction | induction | induction | induction |
| | Fre. (Hz) | 3k | 3k | 3k | 3k | 3k |
| joint surface roughness Rmx(µm) | | 30 | 30 | 30 | 30 | 30 |
| shielding gas | | N₂ | N₂ | N₂ | N₂ | N₂ |
| bonding temp. (°C) | | 1,200 | 1,200 | 1,200 | 1,200 | 1,200 |
| holding period (sec) | | 90 | 90 | 90 | 90 | 90 |
| applied pressure (MPa) | | 5 | 5 | 5 | 5 | 5 |
| rapid cooling of bonded portion | | yes | yes | yes | yes | yes |
| bonding interface heat treatment | | no | 300°Cx0.5h | 350°Cx0.5h | 450°Cx 1h | 500°Cx 2h |
| bonding efficiency | | good | good | good | good | good |
| tension test | tensile strength (MPa) | 784 | 761 | 758 | 747 | 659 |
| | elongation (%) | 33 | 31 | 31 | 32 | 20 |
| | fractured position | SCMnH3 basic material | SCMnH3 basic material | SCMnH3 basic material | SCMnH3 basic material | bonding interface |
| fatigue test | stress amplitude Nf at 206MPa | >4x10⁶ | >2x10⁶ | >3x10⁶ | >3x10⁶ | >1x10⁶ |
| | fractured position | SCMnH3 basic material | SCMnH3 basic material | SCMnh3 basic material | SCMnH3 basic material | bonding interface |
| total evaluation | | good | good | good | good | medium |

Table 9 shows a result in the case where the same bonding was effected. However, in this case, the bonding portion was rapidly cooled with water after bonding, and further examples 36 to 39 were subjected to shot-peening. In examples 37 and 39 among these examples, the shot-peening was effected after the heat treatment (reheating to 350°C, holding at the same temperature for one hour, and air cooling). From Table 9, it will be understood that it is preferable to effect the shot-peening of the bonding portion after the bonding, and more preferably to effect the shot-peening after the heat treatment.

**Table 9**

| items | | Ex. 35 | Ex. 36 | Ex. 37 | Ex. 38 | Ex. 39 |
|---|---|---|---|---|---|---|
| | | Invention | Invention | Invention | Invention | Invention |
| insert | kind | Ni-Si-B (sheet) | Ni-Si-B (sheet) | Ni-Si-B (sheet) | Ni-Si-B (sheet) | Ni-Si-B (sheet) |
| | melt. temp. (°C) | 1,050 | 1,050 | 1,050 | 1,050 | 1,050 |
| heating method | kind | induction | induction | induction | induction | induction |
| | Fre. (Hz) | 3k | 3k | 3k | 3k | 3k |
| joint surface roughness Rmx(µm) | | 30 | 30 | 30 | 30 | 30 |
| shielding gas | | N₂ | N₂ | N₂ | N₂ | N₂ |
| bonding temp. (°C) | | 1,200 | 1,200 | 1,200 | 1,200 | 1,200 |
| holding period (sec) | | 120 | 120 | 120 | 120 | 120 |
| applied pressure (MPa) | | 10 | 10 | 10 | 10 | 10 |
| rapid cooling of bonded portion | | yes | yes | yes | yes | yes |
| bonding interface heat treatment | | no | no | 350°Cx1 h | no | 350°Cx 1h |
| shot-peening arc height (mmA) | | no | 0.9 | 1.0 | 1.3 | 2.0 |
| bonding efficiency | | good | good | good | good | good |
| fatigue test | stress amplitude Nf at 225MPa | 2.0x10⁶ | 2.2x10⁶ | 2.8x10⁶ | 3.2x10⁶ | 3.8x10⁶ |
| | fractured position | SCMnH3 basic material | SCMnH3 basic material | SCMnH3 basic material | SCMnH3 basic material | SCMnH3 basic material |
| total evaluation | | good | good | good | good | good |

As described above, according to the present invention, the crossing rail made of high manganese cast steel and the regular rail may be bonded together in a short time, and it is possible to carry out the bonding without melting the bonding faces of both rail faces. Accordingly, there is advantage that any weld crack or any material quality degradation like the arc welding would not be caused.

Various details of the invention may be changed without departing from its spirit nor its scope. Furthermore, the foregoing description of the embodiments according to the present invention is provided for the purpose of illustration only, and not for the purpose of limiting the invention as defined by the appended claims and their equivalents.

## Claims

1. A method for bonding a crossing rail (1), comprising the steps of:
inserting an insert member (5) having a melting point Ti that is lower than the melting point Tb of a metal material of a crossing rail (1) made of a high manganese cast steel and having a melting point TB1, or a regular rail (3) having a melting point TB2, in between said crossing rail (1) and said regular rail (3); and
while applying a pressure to a bonding interface of said crossing rail (1) and said regular rail (3) through said insert member (5), heating the bonding portion to a temperature T to meet a relationship Ti<T<Tb and holding the temperature T for a constant period of time to thereby bond both the rails without melting any of the rails.

2. A method as claimed in claim 1, characterized in that the bonding portion is heated by using a high frequency wave induction heating method at a frequency of 400kHz or lower.

3. A method as claimed in claim 1, characterized in that the bonding portion is heated by using a direct electric heating method at a frequency of 400 kHz or lower.

4. A method as claimed in any of claims 1 to 3, characterized in that a sheet or powder made of nickel alloy having a melting temperature of 1,200 °C or lower is used as the insert member (5)

5. A method as claimed in any of claims 1 to 4, characterized in that the bonding conditions are that the bonding temperature T meets the relationship T≤1,300°C, the applied pressure P to the bonding interface meets the relationship P≥1MPa, the holding tune S at the bonding temperature T meets the relationship S≥60 secs, and the surface roughness Rmax of the bonding interface meets the relationship Rmax≤100µm.

6. A method as claimed in any of claims 1 to 5, characterized in that the bonding portion is bonded with inert gas shielding.

7. A method as claimed in any of claims 1 to 6, characterized in that the bonding portion is rapidly cooled after the bonding.

8. A method as claimed in any of claims 1 to 6, characterized in that the bonding portion is heated to a temperature in the range of 300°C to 450°C after the bonding, and the bonding portion is maintained for 0.5 hours or longer at the same temperature, and then cooled.

9. A method as claimed in claim 7, characterized in that the bonding portion is heated to a temperature in the range of 300°C to 450°C after the rapid cooling, and the bonding portion is maintained for 0.5 hours or more at the same temperature, and then cooled.

10. A method as claimed in any of claims 1 to 6, characterized in that the bonding portion is subjected to a shot-peening after the bonding.

11. A method as claimed in claim 7, characterized in that the bonding portion is subjected to a shot-peening after the rapid cooling.

12. A method as claimed in claim 8 or 9, characterized in that the bonding portion is subjected to a shot-peering after the cooling.

13. Apparatus for bonding a crossing rail (1), for use in the method for bonding a crossing rail according to claim 1, comprising heating means (6; 12, 13) for heating a bonding portion, means (7) for measuring the temperature of the bonding portion, means (2, 4) for applying a pressure to bonding interfaces, means (9) for measuring the pressure, means (8) for causing inert gas to flow in the vicinity of the bonding portion, and means (10) for controlling these means.

## Patentansprüche

1. Verfahren zum Verbinden einer Kreuzungsschiene (1), welches die folgenden Verfahrensschritte aufweist:
ein Einfügen eines Einlegestückes (5) mit einem Schmelzpunkt Ti der tiefer liegt als der Schmelzpunkt Tb eines Metallmaterials einer Kreuzungsschiene (1) die aus einem hochmanganhaltigen Gußstahl hergestellt ist und einen Schmelzpunkt TB1 aufweist, oder einer üblichen Schiene (3) mit einem Schmelzpunkt TB2, zwischen die Kreuzungsschiene (1) und die übliche Schiene (3); und
im Verlaufe des Aufbringens eines Druckes auf eine verbindende Grenzfläche der Kreuzungsschiene (1) und der üblichen Schiene (3) durch das Einlegestück (5), ein Erhitzen des verbindenden Teiles auf eine Temperatur T, um einer Relation Ti<T<Tb zu entsprechen und ein Beibehalten der Temperatur T während einer konstanten Zeitdauer, um auf diese Weise die beiden Schienen zu verbinden ohne irgendeine der Schienen zu schmelzen.

2. Verfahren wie in Anspruch 1 beansprucht, dadurch gekennzeichnet, daß der verbindende Teil unter Einsatz eines bei einer Frequenz von 400 kHz oder weniger betriebenen Hochfrequenzwelleninduktionsheizverfahrens erhitzt wird.

3. Verfahren wie in Anspruch 1 beansprucht, dadurch gekennzeichnet, daß der verbindende Teil unter Einsatz eines bei einer Frequenz von 400 kHz oder weniger betriebenen direkten elektrischen Heizverfahrens erhitzt wird.

4. Verfahren wie in irgendeinem der Ansprüche 1 bis 3 beansprucht, dadurch gekennzeichnet, daß ein Blech oder ein Pulver, welche aus einer Nickellegierung bestehen und eine Schmelztemperatur von 1.200°C oder weniger aufweisen, als das Einlegestück (5) benutzt werden.

5. Verfahren wie in irgendeinem der Ansprüche 1 bis 4 beansprucht, dadurch gekennzeichnet, daß die Verbindungsbedingungen darin bestehen, daß die Verbindungstemperatur T die Relation T ≤ 1.300°C erfüllt, der auf die verbindende Grenzfläche aufgebrachte Druck P die Relation P ≥1 Mpa erfüllt, die Zeit S des Haltens auf der Verbindungstemperatur T die Relation S ≥ 60 sec erfüllt und die Oberflächenrauheit Rmax der verbindenden Grenzfläche die Relation Rmax ≤ 100 µm erfüllt.

6. Verfahren wie in irgendeinem der Ansprüche 1 bis 5 beansprucht, dadurch gekennzeichnet, daß der verbindende Teil unter einer Abschirmung aus Inertgas verbunden wird.

7. Verfahren wie in irgendeinem der Ansprüche 1 bis 6 beansprucht, dadurch gekennzeichnet, daß der verbindende Teil, nach Bewerkstelligung der Verbindung, rasch abgekühlt wird.

8. Verfahren wie in irgendeinem der Ansprüche 1 bis 6 beansprucht, dadurch gekennzeichnet, daß der verbindende Teil, anschließend an die Bewerkstelligung der Verbindung, auf eine Temperatur in dem Bereich von 300°C bis 450°C erhitzt wird und daß der verbindende Teil während 0,5 Stunden oder länger bei der gleichen Temperatur gehalten und dann abgekühlt wird.

9. Verfahren wie in Anspruch 7 beansprucht, dadurch gekennzeichnet, daß der verbindende Teil, anschließend an das rasche Abkühlen, auf eine Temperatur in dem Bereich von 300°C bis 450°C erhitzt wird und daß der verbindende Teil während 0,5 Stunden oder länger bei der gleichen Temperatur gehalten und dann abgekühlt wird.

10. Verfahren wie in irgendeinem der Ansprüche 1 bis 6 beansprucht, dadurch gekennzeichnet, daß der verbindende Teil, nach Bewerkstelligung der Verbindung, einem Kugel strahlen unterzogen wird.

11. Verfahren wie in Anspruch 7 beansprucht, dadurch gekennzeichnet, daß der verbindende Teil, anschließend an das rasche Abkühlen, einem Kugel strahlen unterzogen wird.

12. Verfahren wie in Anspruch 8 oder 9 beansprucht, dadurch gekennzeichnet, daß der verbindende Teil, anschließend an das Abkühlen, einem Kugelstrahlen unterzogen wird.

13. Vorrichtung zum Verbinden einer Kreuzungsschiene (1), welche für den Einsatz bei einem Verfahren zum Verbinden einer Kreuzungsschiene gemäß Patentanspruch 1 bestimmt ist und als Elemente umfaßt; ein Heizmittel (6; 12, 13) zum Erhitzen eines verbindenden Teiles, ein Mittel (7) zum Messen der Temperatur des verbindenden Teiles, ein Mittel (2, 4) zum Aufbringen eines Druckes auf die verbindenden Grenzflächen, ein Mittel (9) zum Messen des Druckes, ein Mittel (8) um das inerte Gas dazu zu veranlassen in die Nachbarschaft des verbindenden Teiles zu fließen und ein Hilfsmittel (10) zum Kontrollieren dieser Mittel.

## Revendications

1. Procédé pour la liaison d'un rail de croisement (1), comprenant les étapes suivantes:
une insertion d'une pièce d'insertion (5) ayant un point de fusion Ti qui est plus bas que le point de fusion Tb d'un matériau métallique d'un rail de croisement (1) fabriqué à partir d'un acier moulé à teneur élevée en manganèse et ayant un point de fusion TB1, ou d'un rail normal (3) ayant un point de fusion TB2, entre ledit rail de croisement (1) et ledit rail normal (3); et,
au cours de l'application d'une pression à une interface de liaison dudit rail de croisement (1) et dudit rail normal (3) par l'intermédiaire de ladite pièce d'insertion (5), un chauffage de la partie de liaison à une température T, pour répondre à la relation Ti<T<Tb, et un maintien de la température T pendant une période de temps constante, pour lier de cette façon les deux rails sans fondre un quelconque des rails.

2. Procédé tel que revendiqué dans la revendication 1, caractérisé en ce que la partie de liaison est chauffée en utilisant un procédé de chauffage par induction à ondes de fréquence élevée travaillant sous une fréquence de 400 kHz ou plus basse.

3. Procédé tel que revendiqué dans la revendication 1, caractérisé en ce que la partie de liaison est chauffée en utilisant un procédé de chauffage électrique direct travaillant sous une fréquence de 400 kHz ou plus basse.

4. Procédé tel que revendiqué dans l'une quelconque des revendications 1 à 3, caractérisé en ce qu'une feuille ou une poudre, constituées d'un alliage de nickel ayant une température de fusion de 1.200°C ou plus basse, sont utilisées en guise de pièce d'insertion (5).

5. Procédé tel que revendiqué dans l'une quelconque des revendications 1 à 4, caractérisé en ce que les conditions de liaison sont, que la température de liaison T remplisse la relation T ≤ 1.300°C, que la pression P appliquée à l'interface de liaison remplisse la relation P ≥ 1 MPa, que le temps S de maintien à la température T de liaison remplisse la relation S ≥ 60 sec et que la rugosité de surface Rmax de l'interface de liaison remplisse la relation Rmax ≤ 100 µm.

6. Procédé tel que revendiqué dans l'une quelconque des revendications 1 à 5, caractérisé en ce que la partie de liaison est liée sous une protection de gaz inerte.

7. Procédé tel que revendiqué dans l'une quelconque des revendications 1 à 6, caractérisé en ce que la partie de liaison est rapidement refroidie, à la suite de la liaison.

8. Procédé tel que revendiqué dans l'une quelconque des revendications 1 à 6, caractérisé en ce que la partie de liaison est chauffée à une température dans l'intervalle de 300°C à 450°C, à la suite de la liaison, et que la partie de liaison est maintenue pendant 0,5 heures ou plus longtemps à la même température et est ensuite refroidie.

9. Procédé tel que revendiqué dans la revendication 7, caractérisé en ce que la partie de liaison est chauffée à une température dans l'intervalle de 300°C à 450°C, à la suite du refroidissement rapide, et que la partie de liaison est maintenue pendant 0,5 heures ou plus longtemps à la même température et est ensuite refroidie.

10. Procédé tel que revendiqué dans l'une quelconque des revendications 1 à 6, caractérisé en ce que la partie de liaison est soumise à un grenaillage, à la suite de la liaison.

11. Procédé tel que revendiqué dans la revendication 7, caractérisé en ce que la partie de liaison est soumise à un grenaillage, à la suite du refroidissement rapide.

12. Procédé tel que revendiqué dans la revendication 8 ou 9, caractérisé en ce que la partie de liaison est soumise à un grenaillage, à la suite du refroidissement.

13. Appareil pour la liaison d'un rail de croisement (1) destiné à être utilisé dans le procédé pour la liaison d'un rail de croisement suivant la revendication 1, comprenant des moyens de chauffage (6; 12, 13) pour chauffer une partie de liaison, des moyens (7) pour mesurer la température de la partie de liaison, des moyens (2, 4) pour appliquer une pression aux interfaces de liaison, des moyens (9) pour mesurer la pression, des moyens (8) pour faire qu'un gaz inerte s'écoule dans le voisinage de la partie de liaison ainsi que des voies (10) pour contrôler ces moyens.
